# EUROPEAN PATENT SPECIFICATION

(11) **EP 2 910 526 B1**
(45) Date of publication and mention of the grant of the patent: **09.01.2019**
(21) Application number: 14461559.8
(22) Date of filing: 12.08.2014
(51) Int. Cl.: C09D 7/43, C01B 33/44

(54) **A method of modification of a bentonite and a method of application of modified bentonite to polymer resins**
Verfahren zur Modifikation von Bentonit und Verfahren zur Anwendung von modifiziertem Bentonit auf Polymerharze
Procédé de modification de la bentonite et procédé d'application de bentonites modifiées sur des résines polymères

(30) Priority: 31.01.2014 PL 40702014
(43) Date of publication of application: 26.08.2015
(73) Proprietor: Politechnika Rzeszowska im. Ignacego Lukasiewicza, 35-959 Rzeszów (PL)
(72) Inventor: Oleksy, Mariusz, 35-083 Rzeszów (PL); Heneczkowski, Maciej, 35-603 Rzeszów (PL); Galina, Henryk, 35-213 Rzeszów (PL); Oliwa, Rafal, 35-211 Rzeszów (PL); Oliwa, Joanna, 35-211 Rzeszów (PL); Szalanski, Piotr, 35-213 Rzeszów (PL)
(74) Representative: BRANDPAT Patent and Trademark Attorneys Chlebicka Czyz Galazkiewicz Ziolkowski Professional Partnership

(56) References cited:
- US-A- 4 216 135
- US-A- 4 474 706
- US-A1- 2007 072 980
- DATABASE WPI Week 201439 Thomson Scientific, London, GB; AN 2014-L22976 XP002741232, & RU 2 519 174 C1 (METAKLEY STOCK CO) 10 June 2014 (2014-06-10)

## Description

The subject of the invention is a method of modifying bentonite which is used especially as a filler of polymer resins.

Commonly hydrothermal technique is used for modifying bentonite (layered silicates), in which modifier ratio, the type of solvent, temperature, intensity and mixing time of modifier and bentonite are changed. There are also methods of modification of bentonite without the use of solvent.

For example, document EP0079972 discloses a method of montmorillonite modification in an aqueous medium using tertiary sulfonic.

Document DE2912070 discloses bentonite modification using quaternary ammonium salts.

Polish patent No. 178900 discloses modification of smectites suspension in previously alkalized aqueous environment. The modification is done by adding 5-200 mmol of quaternary ammonium salts with the properly selected chemical structure to the reaction medium in the temperature of 20 -70° C for 100g of aluminosilicate.

A definite drawback of solvent modification methods is the necessity of using a large excess of a liquid dispersant which his mostly water and in consequence a considerable amount of energy during filtration, washing, drying and grinding of the product until a powder with a grain size<0,006 mm is obtained - preferred from the perspective of application for polymer resins.

These considerations lead to more and more interest in the methods of dry (without the use of solvent) modification of bentonite and other minerals of similar nature, however, reports in the literature on this subject are relatively poor.

Limited research in this field includes the publication of N. Khaorapapong and M. Ogawa published in Applied Clay Science, 2007, 35, 31-38, the authors used the complexes of Li (I) -, Zn (II) - and Mn (II) - 8-hydroxyquinoline for montmorillonite modification using a solvent-free method (solid phase). The effectiveness of the modification and the plates' separation were examined using a powder diffraction XRD, FT-IR, TG-DTA. In turn, GeJiaDemin and Mingijang in a publication of the Journal of Reinforced Plastics and Composites, 2009, 28, 5-15 described the modification of sodium montmorillonite with alkyl ammonium cations with the substituents on the chain length of 16 carbons using a so called dry method in the temperature of 80°C. The modified montmorillonite (OMMT) was used to prepare polypropylene nanocomposites from OMMT with different content of OMMT. The distance between the plates of montmorillonite increased from initial 1.58nm to 3.71nmafter the modification. The same authors - Ge Mingijang and JiaDemin (Journal of Elastomers and Plastics, 2008, 40, 223-234) carried out a bentonite modification in a solid phase using ammonium salt of the formula [CH3 (CH2) 15N+(CH3) 3] Br-in the presence of silaneKH-560 produced by Shuguang Chemical What. Ltd (Nanjing, China). The modification was carried out at 80 ° C and stirred for 8 hours. Authors used modified bentonite (OMMT) for the preparation of nanocomposites of poly (vinyl chloride) from OMMT using mixed extrusion method (compounding). The distance between the plates increased from 1.48nm to 3.89nm.

Document US4474706A discloses a method of modifying bentonite by mixing the bentonite with a modifier in the solid phase which comprises reacting a dry swellable clay with dimethyl dihydrogenated tallow ammonium chloride and methyl benzyl dihydrogenated tallow ammonium chloride.

Document US4216135A discloses a method of modifying bentonite with methyl benzyl dicoconut fatty acid ammonium chloride in the wet state and treating a resin with the modified bentonite.

Document US2007/072980A1 discloses a method comprising modifying distearyldimethylammoniumchloride-modified bentonite in the dry state. The rotation rate of the mixer is adjusted to 1360 rpm (revolutions per minute), and the system is heated to a temperature of 45 ° C. At this temperature, the methyl ester of rapeseed oil and polyethylsiloxane are metered in over a period of 30 s. In order to ensure homogeneous and thorough mixing, the additives are added directly into the vortex produced via the mixing element. At the stated rotation rate, the reaction mixture is heated to the discharge temperature of 80 ° C.

The aim of the invention is to provide a method of modification of bentonite in the solid phase with low electricity demand, as well as the development of a method to introduce a modified bentonite to polymer resins, ameliorating filled resin properties after curing.

Modification of bentonite method, as the essence of the invention, is done by adding into a mixer of granular products, preferably a drum mixer of type V, preferably with an apex angle of 60-65 °, at 20-30° C, finely divided bentonite with a grain size of less than 0,006mm and from 28 to 35 g comminuted to a grain size of not more than 0,006mm of modifier per 100g of bentonite, wherein the bentonite modifiers were used: quaternary ammonium salts with four aliphatic substituents or/with one benzyl or phenyl and 3-alkyl: ethyl, or butyl, and salts with three aromatic substituents: phenyl or benzyl and one of alkyl: ethyl, or butyl, as well as derivatives of polyhedral oligomeric silsesquioxane (POSS): oktakis(tetramethylammonium)octasilsesquioxane or oktakis{3-(N-(hydroxyethyl)-dimethylamino)propyl} -octasilsesquioxane or aminopropylisobutyloctasilsesquioxane, mixing process is carried out using a rotational speed of 35 to 45 rpm during 8-14 hours, depending on the modifier used. Preferably, the process is carried out at the filling of the mixer in the range of 60-65%.

After this time, the mixer is stopped and modified bentonite is removed. The product is sieved on a sieve having a mesh size of 0,006mm. Preferably, for some specific use, the product is further sieved through a sieve with active silver for the removal of metal salts created from ion exchange: NaCl,CaC12, KCl, etc.

The modified bentonite obtained by with the method according to the invention may be introduced in an amount of 0.1-10,0g, preferably 1-4g, to 100g of a liquid epoxy resin or a polyester or polyurethane, and then the mixture is homogenized with resin using multistage mixing:
- premixing with a low-speed mechanical stirrer at a stirrer speed of 100-200 rpm, until full moisturizing,
- using an ultrasonic homogenizer at a temperature of 40-60° C for at least 10 min,
- mixing with a high shear mixer 6000-10000 rpm for 15-30 min, preferably under reduced pressure,
- mixing in a cylinder type homogenizer in a cylinder at high shear providing a rotational speed of approximately 3000-6000 rpm for 15-25min.

This multi-stage homogenization allows for accurate dispersion of nanoparticles of the filler in a resin, as evidenced by the clarity of composition, as well as the lack of sedimentation of the filler particles during long-term storage. The moldings casted from prepared in such way compositions of chemically cured resins: epoxy or polyester or polyurethane, had a clearly improved tensile strength (35-50%), Young's modulus (about 30-55%) and oxygen index LOI (by 45-60%).

The invention is further illustrated in the following examples:

### Example 1 (not according to the invention)

400g of bentonite with a grain size <0,006 mm and 120g of benzylodibutylododecyloammonium chloride with a particle size of<0,006 mm are placed in a V-type drum mixer with an apex angle of 60 °and a capacity of 0.8 1 and after the closure of the supply-drain opening, the mixer is turned on. The process is carried out at room temperature at a rotational speed equal to 35 rpm. The duration of modification is 8 hours. After this time, the mixer is stopped and the modified product is removed, and then it is sieved through a sieve with a mesh size of 0,006mm.To remove the metal chlorides formed by reaction product should be further sieved through a sieve with active silver.

Obtained in such way bentonite modified by benzylodibutylododecyloammonium chloride is introduced in an amount of 9g into 300g unsaturated polyester resin of low molecular weight - Polimal 109 type and pre-mixed in a beaker with a mechanical stirrer in about 100 1/min speed at room temperature and then the mixture is placed in a ultrasonic mixer and heated for 15 min at 50 ° C. The pre-mixed in such way composition is also homogenized at 50 °C for 30 min in a high shear mixer with a turbine stirrer and thermostatic jacket at 8000 1/min speed at reduced to about 0,01 MPa pressure. Next, for full dispersion of the modified bentonite in the resin, compositions are triturated in a high shear homogenizer cylinder of the cylinder-type allowing the shear speed of 4500 1/min. The duration of the process was 15 min. The resultant composition shows no sedimentation of bentonite filler during storage for 6 months.

The composition is cured at room temperature adding 2% wt., relative to the polyester resin, cyclohexanone peroxide and 0.4% wt. 10% solution of cobalt aphthenate in styrene. After mixing with hardeners and venting, the mixture is poured into molds to form test strength. The compositions were cured for 24 hours at room temperature and then for 2 hours at 80 °C. The resulting fittings (UP-OMMT) have significantly better properties than those obtained with the uninflated resin (UP), as shown by the test results provided in Table 1.

**Table 1**

| Specimen type | Tensile strength, MPa | Charpy Impact strength, kJ/m2 | Oxygen index (LOI), % O₂ |
|---|---|---|---|
| UP | 60,4 | 5,6 | 17,2 |
| UP-OMMT | 88,3 | 9,1 | 24,8 |

### Example 2 (not according to the invention)

The bentonite modification process is carried out similarly as in Example1. 400g of bentonite with a grain size <0,006 mm and 130g of oktakis(tetramethylammonium)octasilsesquioxane with a particle size of <0,006 mm as well are placed in a V-type drum mixer with an apex angle of 60°. 9 g of bentonite modified by oktakis(tetramethylammonium)octasilsesquioxane is introduced into 300g of unsaturated polyester resin of low molecular weight - Polimal 109 type. The resulting composite is characterized by: tensile strength of 87.2MPa, Rockwell hardness of 46.3MPa, Charpy impact strength of 8.8 kJ/m2 and the oxygen index LOI-24.2.

### Example 3 (not according to the invention).

400g of bentonite with a grain size <0,006 mm and 70 g butyl(triphenyl)phosphonium chloride and 70 g of benzylodibutylododecyloammonium chloride with a particle size of <0,006 mm are placed in a V-type drum mixer with an apex angle of 60 ° and a capacity of 0.8 1 and after the closure of the supply-drain opening, the mixer is turned on. The process is carried out at room temperature at a rotational speed equal to from 50 rpm. The duration of modification is 14 hours. After this time, the mixer is stopped and the modified product is removed, and then it is sieved through a sieve with a mesh size of 0,006mm. To remove the metal chlorides formed by reaction product should be further sieved through a sieve with an active silver.

Obtained in such way bentonite modified by butyl(triphenyl)phosphonium chloride and benzylodibutylododecyloammonium chloride is introduced in an amount of 9g into 300g epoxy resin of low molecular weight - Epidian 6 type and pre-mixed in a beaker with a mechanical stirrer in about 200 1/min speed at room temperature and then the mixture is placed in a ultrasonic mixer and heated for 30 min at 60 ° C. The pre-mixed in such way composition is also homogenized at 60 °C for 30 min in a high shear mixer with a turbine stirrer and thermostatic jacket at 8000 1/min speed at reduced to about 0,01MPa pressure. Next, for full dispersion of the modified bentonite in the resin, compositions are triturated in a high shear homogenizer cylinder of the cylinder-type allowing the shear speed of 4000 1/min. The duration of the process was 15 min. The resultant composition shows no sedimentation of bentonite filler during storage for 6 months.

The composition is cured at room temperature adding 13% wt., relative to the epoxy resin, triethylenetetramine as a curing agent and mixing with care. After mixing with hardeners and venting, the mixture is poured into molds to form test strength. The compositions were cured for 24 hours at room temperature and then for5 hours at 100 °C. The resulting fittings (EP-OMMT) have significantly better properties than those obtained with the uninflated resin (EP), as shown by the test results provided in Table 2.

**Table 2**

| Specimen type | Tensile strength, MPa | CharpyImpact strength, kJ/m2 | Oxygen index(LOI), % O₂ |
|---|---|---|---|
| EP | 43,2 | 3,8 | 18,6 |
| EP-OMMT | 56,7 | 6,1 | 29,9 |

### Example 4 (not according to the invention).

400g of bentonite with a grain size <0,006 mm and 140 g of butyl(triphenyl)phosphonium chloride and with a particle size of <0,006 mm are placed in a V-type drum mixer with an apex angle of 60 °and a capacity of 0.8 1 and after the closure of the supply-drain opening, the mixer is turned on. The process is carried out at room temperature at a rotational speed equal to 45 rpm. The duration of modification is 14 hours. After this time, the mixer is stopped and the modified product is removed, and then it is sieved through a sieve with a mesh size of 0,006mm. To remove the metal chlorides formed by reaction product should be further sieved through a sieve with an active silver.

Obtained in such way bentonite modified by butyl(triphenyl)phosphonium chloride is introduced in an amount of 9g into 300g epoxy resin of low molecular weight - Epidian 6 type and pre-mixed in a beaker with a mechanical stirrer in about 200 1/min speed at room temperature and then the mixture is placed in a ultrasonic mixer and heated for 10 min at 60 ° C.

The pre-mixed in such way composition is also homogenized at 60 °C for 30 min in a high shear mixer with a turbine stirrer and thermostatic jacket at 6000 1/min speed at reduced to about 0,01 MPa pressure. Next, for full dispersion of the modified bentonite in the resin, compositions are triturated in a high shear homogenizer cylinder of the cylinder-type allowing the shear speed of 4000 1/min. The duration of the process was 15 min. The resultant composition shows no sedimentation of bentonite filler during storage for 6 months.

The composition is cured at room temperature adding and carefully mixing with 13% wt. resin, relative to the epoxy resin, triethylenetetramine as a curing agent. After mixing with hardeners and venting, the mixture is poured into molds to form for test strength. The compositions were cured for 24 hours at room temperature and then for 5 hours at 100 °C. The resulting fittings (EP-OMMT) have significantly better properties than those obtained with the uninflated resin (EP), as shown by the test results provided in Table 3.

**Table 3**

| Specimen type | Tensile strength, MPa | CharpyImpact strength, kJ/m2 | Oxygen index(LOI), % O₂ |
|---|---|---|---|
| EP | 43,2 | 3,8 | 18,6 |
| EP-OMMT | 55,8 | 5,9 | 30,8 |

### Example 5 (not according to the invention)

400g of bentonite with a grain size <0,006 mm and 130 g of oktakis(tetramethylammonium)octasilsesquioxane with a particle size of <0,006 mm are placed in a V-type drum mixer with an apex angle of 60 °and a capacity of 0.8 1 and after the closure of the supply-drain opening, the mixer is turned on. The process is carried out at room temperature at a rotational speed equal to 40 rpm. The duration of modification is 10 hours. After this time, the mixer is stopped and the modified product is removed, and then it is sieved through a sieve with a mesh size of 0,006mm. To remove the metal chlorides formed by reaction product should be further sieved through a sieve with an active silver.

Obtained in such way bentonite modified by oktakis(tetramethylammonium)octasilsesquioxane is introduced in an amount of 18 g into 300g of the first polyol component of chemo-curable type polyurethane FC55RenCast epoxy resin and pre-mixed in a beaker with a mechanical stirrer in about 100 1/min speed at room temperature and then the mixture is placed in a ultrasonic mixer and heated for 20 min at 40 ° C. The pre-mixed in such way composition is also homogenized at 40 °C for 40 min in a high shear mixer with a turbine stirrer and thermostatic jacket at 6000 1/min speed at reduced to about 0,01MPa pressure. Next, for full dispersion of the modified bentonite in the resin, compositions are triturated in a high shear homogenizer cylinder of the cylinder-type allowing the shear speed of 4000 1/min. The duration of the process was 15 min. The resultant composition shows no sedimentation of bentonite filler during storage for 6 months.

The composition is cured at room temperature adding a second component of the isocyanate resin in an amount of 300 g. The mixture was placed in a laboratory vacuum chamber in which composition was thoroughly mixed and vented and subsequently poured into molds to form test strength. The compositions were cured for 24 hours at room temperature and then for 24 hours at room temperature and then for 4 hours at 60 °C.

The resulting fittings (PU-OMMT) have significantly better properties than those obtained with the uninflated resin (PU), as shown by the test results provided in Table 4.

**Table 4**

| Specimen type | Tensile strength, MPa | CharpyImpact strength, kJ/m2 | Oxygen index (LOI), % O₂ |
|---|---|---|---|
| PU | 70,3 | 8,3 | 19,2 |
| PU-OMMT | 74,6 | 9,1 | 23,3 |

### Example 6 (not according to the invention).

Similarly like in Example 4, 400g of bentonite with a grain size <0,006 mm and 130g of oktakis{3-(N-(hydroxyethyl)dimethylamino)propyl}octasilsesquioxane with a particle size of <0,006 mm are placed in a V-type drum mixer with an apex angle of 60 °C. To 300g of the first polyol component of chemo-curable type polyurethane resin RenCast FC55, 18g of bentonite modified with oktakis{3-(N-(hydroxyethyl)-dimethylamino)propyl}octasilsesquioxane. The resulting composite is characterized by tensile strength of 78.9 MPa, Charpy impact strength of 9.8 kJ/m2 and oxygen index LOI of23.1.

### Example 7 (not according to the invention)

400g of bentonite with a grain size <0,006 mm and 130 g of aminopropylisobutyloctasilsesquioxane with a particle size of <0,006 mm are placed in a V-type drum mixer with an apex angle of 60 °and a capacity of 0.8 1 and after the closure of the supply-drain opening, the mixer is turned on. The process is carried out at room temperature at a rotational speed of 40 rpm. The duration of modification is 10 hours. After this time, the mixer is stopped and the modified product is removed, and then it is sieved through a sieve with a mesh size of 0,006mm. To remove the metal chlorides formed by reaction product should be further sieved through a sieve with an active silver.

Obtained in such way bentonite modified by aminopropylisobutyloctasilsesquioxane is introduced in an amount of 18 g into 300gof the first polyol component of chemo-curable type polyurethane resin FC55 RenCast and pre-mixed in a beaker with a mechanical stirrer in about 100 1/min speed at room temperature and then the mixture is placed in a ultrasonic mixer and heated for 20 min at 40 ° C. The pre-mixed in such way composition is also homogenized at 40 °C for 40 min in a high shear mixer with a turbine stirrer and thermostatic jacket at 6000 1/min speed at reduced to about 0,01MPa pressure. Next, for full dispersion of the modified bentonite in the resin, compositions are triturated in a high shear homogenizer cylinder of the cylinder-type allowing the shear speed of 4000 1/min. The duration of the process was 15 min. The resultant composition shows no sedimentation of bentonite filler during storage for 6 months.

The composition is cured at room temperature adding a second component of the isocyanate resin in an amount of 300 g. The mixture was placed in a laboratory vacuum chamber in which composition was thoroughly mixed and vented and subsequently poured into molds to form test strength. The compositions were cured for 24 hours at room temperature and then for 24 hours at room temperature and then for 4 hours at 60 °C.

The resulting fittings (PU-OMMT) have significantly better properties than those obtained with the uninflated resin (PU), as shown by the test results provided in Table 5.

**Table 5**

| Specimen type | Tensile strength, MPa | CharpyImpact strength, kJ/m2 | Oxygen index(LOI), % O₂ |
|---|---|---|---|
| PU | 70,3 | 8,3 | 19,2 |
| PU-OMMT | 73,2 | 9,0 | 23,1 |

## Claims

1. A method of modification of bentonite by mixing bentonite with a modifier in the solid phase and the modified bentonite is sieved, **characterized in that**, into a mixer of granular products, there are introduced, at the temperature of 20 - 30 °C,
a comminuted bentonite with a grain size of less than 0,006 mm,
a comminuted modifier with a grain size of not more than 0,006 mm in an amount from 28 to 35 g per 100g of bentonite,
wherein the following bentonite modifiers are used:
a) quaternary ammonium salts with four aliphatic substituents or with one benzyl or phenyl and 3 alkyl: ethyl, or butyl, and/or
b) salts with three aromatic substituents: phenyl or benzyl and one of alkyl: ethyl, or butyl, and/or
c) derivatives of polyhedral oligomeric silsesquioxane (POSS) selected from oktakis(tetramethylammonium)octasilsesquioxane or oktakis{3-(N-(hydroxyethyl)-dimethylamino)propyl}octasilsesquioxane or aminopropylisobutyloctasilsesquioxane;
and mixing process is carried out using a rotational speed of 35 to 45 rpm during 8-14 hours, depending on the modifier used, then the product is sieved on a sieve of a mesh size of 0,006 mm.

2. The method according to claim 1, **characterized in that** the mixing process of granular products is carried out with a V-type drum mixer.

3. The method according to claim 1 or 2, **characterized in that** the process is carried out with a drum mixer with an apex angle of 60 - 65°.

4. The method according to claim 1 or 2, **characterized in that** the process is carried out with a drum mixer filled to 60 - 65% of volume of the mixer.

5. The method according to claim 1, **characterized in that** the modified bentonite is sieved through a sieve with active silver.

## Patentansprüche

1. Die Methode zur Bentonitmodifizierung durch Mischen von Bentonit mit einem Modifikator in der festen Phase und das modifizierte Bentonit wird durchgesiebt, **dadurch gekennzeichnet, dass** in einen Schüttgutmischer, bei einer Temperatur von 20 bis 30°C,
ein zerkleinertes Bentonit mit einer Korngröße von weniger als 0,006 mm,
ein zerkleinertes Modifizierungsmittel mit einer Korngröße von nicht mehr als 0,006 mm in einer Menge von 28 bis 35 g pro 100 g Bentonit eingeführt werden,
wobei die folgenden Bentonit-Modifikatoren verwendet werden:
a) quartären Ammoniumsalzen mit vier aliphatischen Substituenten oder mit einer Benzyl- oder Phenyl- und drei Alkyl-: Ethyl-, oder Butylsubstituenten und/oder
b) Salze mit drei aromatischen Substituenten: Phenyl oder Benzyl und einer von Alkyl: Ethyl oder Butyl und/oder
c) Derivate von polyedrischem oligomerem Silasesquioxan (POSS), ausgewählt aus Oktakis(tetramethylammonium)octasilsesquioxan oder Oktakis{3-(N-(hydroxyethyl) dimethylamino)propyl} octasilsesquioxan oder Aminopropylisobutyloctasilsesquioxan; und der Mischvorgang wird unter Verwendung einer Rotationsgeschwindigkeit von 35 bis 45 U/min während 8 bis 14 Stunden durchgeführt, abhängig von dem verwendeten Modifikator, dann wird das Produkt durch ein Sieb mit einer Maschenweite von 0,006 mm gesiebt.

2. Verfahren nach Anspruch 1, **dadurch gekennzeichnet, dass** der Mischvorgang von körnigen Produkten mit einem V-Typ-Trommelmischer erfolgt.

3. Verfahren nach Anspruch 1 oder 2, **dadurch gekennzeichnet, dass** das Verfahren mit einem Trommelmischer mit einem Scheitelwinkel von 60-65° durchgeführt wird.

4. Verfahren nach Anspruch 1 oder 2, **dadurch gekennzeichnet, dass** das Verfahren mit einem Trommelmischer durchgeführt wird, der zu 60-65% des Volumens des Mischers gefüllt ist.

5. Verfahren nach Anspruch 1, **dadurch gekennzeichnet, dass** der modifizierte Bentonit durch ein Sieb mit aktivem Silber gesiebt wird.

## Revendications

1. La méthode de modification de la bentonite par mélange de la bentonite avec un modificateur dans la phase solide et le tamisage de la bentonite modifiée, **caractérisée par le fait que** dans un mélangeur de produits granulaires, sont introduits, à la température de 20 - 30°C,
une bentonite broyée avec une taille de grain inférieure à 0,006 mm,
un modificateur broyé avec une taille de grain ne dépassant pas 0,006 mm en quantité de 28 à 35 g pour 100 g de bentonite,
dans lequel les modificateurs de bentonite suivants sont utilisés:
a) des sels d'ammonium quaternaire avec quatre substituants aliphatiques ou avec un benzyle ou un phényle et 3 alkyles: éthyle ou butyle, et/ou
b) des sels avec trois substituants aromatiques: phényle ou benzyle et l'un des alkyles: éthyle ou butyle, et/ou
c) dérivés de silsesquioxane oligomère polyhédral (POSS) choisi parmi octakis(tétraméthylammonium)octasilsesquioxane ou octakis{3-(N-(hydroxyéthyl)diméthylamino)propyl}octasilsesquioxane ou amino-prpylisobutyloctasilsesquioxane;
et le processus de mélange est effectué en utilisant une vitesse de rotation de 35 à 45 tr/min pendant 8 à 14 heures, en fonction du modificateur utilisé, puis le produit est tamisé sur un tamis d'un maillage de 0,006 mm.

2. La méthode selon la revendication 1, **caractérisée par le fait que** le processus de mélange des produits granulaires est effectué avec un mélangeur à tambour en V.

3. La méthode selon la revendication 1 ou 2, **caractérisée par le fait que** le processus est effectué avec un mélangeur à tambour avec un angle au sommet de 60 - 65°.

4. La méthode selon la revendication 1 ou 2, **caractérisée par le fait que** le processus est effectué avec un mélangeur à tambour rempli à 60 - 65% du volume du mélangeur.

5. La méthode selon la revendication 1, **caractérisée par le fait que** la bentonite modifiée est tamisée à l'aide d'un tamis à l'argent actif.
